# EUROPEAN PATENT SPECIFICATION

(11) **EP 3 566 952 B1**
(45) Date of publication and mention of the grant of the patent: **27.01.2021**
(21) Application number: 17879560.5
(22) Date of filing: 27.12.2017
(51) Int. Cl.: B64D 27/10, B64D 27/16, F02C 6/08, F02C 7/08, F02C 7/10

(54) **DISTRIBUTED PROPULSION SYSTEM**
VERTEILTES ANTRIEBSSYSTEM
SYSTÈME DE PROPULSION DISTRIBUÉ

(30) Priority: 06.01.2017 CN 201720012557 U; 06.01.2017 CN 201710008820
(43) Date of publication of application: 13.11.2019
(73) Proprietor: Northwestern Polytechnical University, Xian, Shanxi 710072 (CN)
(72) Inventor: CHEN, Yuchun, Xi'an, Shaanxi 710072 (CN); JIA, Linyuan, Xi'an, Shaanxi 710072 (CN); KANG, Ruiyuan, Xi'an, Shaanxi 710072 (CN); ZHANG, Shaofeng, Xi'an, Shaanxi 710072 (CN); ZHAO, Bobo, Xi'an, Shaanxi 710072 (CN)
(74) Representative: Sun, Yiming
(86) International application number: PCT/CN2017/118908
(87) International publication number: WO 2018/103762

(56) References cited:
- EP-A2- 1 331 386
- EP-A2- 2 581 308
- CN-A- 103 423 116
- CN-A- 104 229 144
- CN-A- 104 670 503
- CN-A- 104 973 234
- CN-A- 106 742 075
- CN-U- 206 528 653
- DE-A1-102008 033 860
- GB-A- 862 479
- GB-A- 1 249 155
- JP-A- H02 283 822
- US-A- 2 604 277
- US-A- 3 388 878
- US-A1- 2002 190 159
- US-A1- 2006 163 434
- SAITO Y ET AL: "CONCEPTUAL STUDY OF SEPARATED CORE ULTRAHIGH BYPASS ENGINE", JOURNAL OF PROPULSION AND POWER, NTRS-NASA TECHNICAL REPORTS SERVER, US, vol. 9, no. 6, 1 November 1993 (1993-11-01), pages 867-873, XP000412352, ISSN: 0748-4658

## Description

### TECHNICAL FIELD

The present invention relates to an aviation propulsion system, and more particularly, to a distributed propulsion system.

### BACKGROUND

Economy is a key factor to be considered for transport aircrafts. Meanwhile, as the environmental friendliness issues continue to emerge, the requirements on lower emission are more and more strict, which requires to improve the power efficiency of the existing transport aircrafts (turbofan engines). One of the effective measures to improve the efficiency of the turbofan engines is to apply higher bypass ratio so as to achieve high propulsion efficiency. The bypass ratio of the current civil turbofan engine is about 10, but it is difficult to achieve a further improvement due to the limitation of the match between structures and components. The distributed propulsion system breaks through the limitation of the match between the structures and components of the conventional turbofan engines, and thus can obtain a higher bypass ratio. Meanwhile, the distributed propulsion system is also more suitable serving as the power of a blended wing body aircraft in the future.

Rolls-Royce Corporation has obtained a number of invention patents of "Distributed Propulsion Systems and Control Methods Therefor" in 2012-2013, and the patent/patent application numbers were EP2581308A2, US2013/0094963A1 and US9376213B2. The inventions use two turbine engines mounted under wings to generate power, and then transmit the power to the propulsors distributed on the wings, wing tips or both sides of the rear of a fuselage, and the propulsors are driven by motors to generate thrust. Rolls-Royce Corporation also applied for a similar Chinese patent in 2014, and the patent application publication number was CN104670503A.

In 2015, United Technologies Corp, US, acquired the invention patent entitled "Contra-Rotating Open Rotor Distributed Propulsion System", and the patent application publication numbers were EP2930114A1 and US2015/0284071A1. The concept of the invention is to drive a power turbine to operate by a gas generator located at the tail of the fuselage. The power turbine indirectly drives contra-rotating open rotors located on both sides of the rear fuselage to generate thrust by a main speed reducer and a secondary speed reducer.

United Technologies Corp, US, proposed an aircraft propulsion system in the invention with the publication No. US2008/0098719A1. In such system, a single gas generator drives a low-pressure turbine, and the low-pressure turbine indirectly drives multiple fans on both sides of the fuselage by a two-stage speed reducer. The air flow compressed by the fans is divided into two streams, one stream is exhausted through a duct from the tail of the aircraft, and the other stream is sucked by a compressor to participate in the thermal cycle of the gas generator.

Airbus Corporation discloses an aircraft with a power device in the invention with the publication No. CN104229144A. The invention is essentially an electrical energy-based distributed propulsion system. The electrical energy is generated by a gas turbine generator, and then is distributed by a power supply device to the propulsion devices located on both sides of the fuselage, so as to drive the same to generate thrust. In order to solve the problem that the output power of the electrical energy generator does not match the power demand of the propulsors, the system is also equipped with an energy storage device and a hybrid power system.

The invention with the publication No. CN104973234A discloses an aircraft using distributed electric ducted fan flap lift-rising system. The inner duct drives a plurality of ducted fans located on the wings and a lift fan system located at the rear of the fuselage by adopting a power source. The type of the power source is not indicated in the specification.

There are many dissertations and academic papers on distributed propulsion systems at present.

The essence of the distributed propulsion system is to distribute the energy generated by centralized energy source generators to a plurality of distributed propulsors, which is accompanied by energy distribution and transportation. According to the energy distribution and transportation manner, the existing distributed propulsion systems may be divided into two types: one type is based on electrical drive (patent applications/patents: EP2581308A2, US2013/0094963A1, US9376213B2, CN104670503A, CN 104229144A and CN104973234A), and the other type is based on mechanical transmission (patent applications/patents: EP2930114A1, US2015/0284071A1 and US2008/0098719A1). In the two types of systems, the high-temperature and high-pressure gas produced by the gas turbine engine is used to generate electricity or drive the turbine to generate shaft work, and then the electricity and shaft work drive the propulsors to generate thrust. There are still some technical difficulties in the implementation of these two types of systems. The technical difficulty of the distributed propulsion systems based on power distribution is the development of high-density energy storage devices and ultra-high-power motors. The problem of the distributed propulsion systems based on mechanical transmission is how to completely get rid of the mechanical constraints of the gas generators and the propulsors. Due to the factors such as the structure and weight of a mechanical transmission device, the distributed distance of the propulsors is limited, which is not conducive to the layout on the aircraft.

The patent application EP 1 331 386 A2 discloses a multi-fan system separated core engine type turbofan engine in which high pressure air is used as the working fluid for a turbine which drives a fan, thereby reducing the manufacturing costs of the turbofan engine and simplifying the constitution thereof. A turbine for driving a fan which is provided in a propulsion device of the multi-fan system separated core engine type turbofan engine is an air turbine which is driven by the supply through a duct of a part of high pressure air compressed in a compressor of a core engine. Since the working fluid of the air turbine for driving the fan is not high temperature combustion gas, there is no need to use expensive heat-resistant material for the turbine, and thus the propulsion device can be manufactured at low cost, the constitution thereof can be simplified, and operational control can be ameliorated.

### SUMMARY

In order to overcome the deficiencies in the prior art that when based on power distribution, the capability of the existing energy storage devices and motors cannot meet the requirements, and when based on mechanical transmission, the mechanical transmission mechanism is complicated and heavy, and is disadvantageous to the layout of the aircraft, the present invention provides a distributed propulsion system according to claim 1 and the preferred embodiments are presented by the dependent claims.

The turbine engine core engine is a single-rotor gas turbojet engine or a dual-rotor turbojet engine. The distributed propulsor is a propulsor turbine-driven ducted fan or propulsor turbine-driven propeller.

The gas collecting device includes multiple gas guiding pipes, a gas collecting ring and multiple gas guiding pipe regulating valves. Multiple gas guiding pipe connecting holes are evenly distributed in the same side surface of a housing of the gas collecting ring, and input ends of the multiple gas guiding pipes are respectively mounted to the respective gas guiding pipe connecting holes. The multiple gas guiding pipe regulating valves are respectively mounted to the output ends of the respective gas guiding pipes. The surface of the housing of the gas collecting ring is arc-shaped, and an opening of the arc-shaped housing of the gas collecting ring is located inside the housing of the gas collecting ring, so that the cross section thereof is U-shaped. A compressor outer casing is cut into two sections; the two side walls at the opening of the gas collecting ring are respectively fixedly connected to the compressor outer casing which is divided into two sections, so that the gas collecting ring and the compressor outer casing jointly form an outlet gas flow outer annular passage of the compressor. The core engine compressor on the gas turbine engine core engine has two annular outlets, which are an inner annular outlet and an outer annular outlet respectively; the outer annular outlet is communicated with an input end of the outlet gas flow outer annular passage of the compressor; and the inner annular outlet is communicated with an input end of a core engine combustion chamber.

During assembly, the output ends of the multiple gas guiding pipes on the housing of the gas collecting ring are respectively communicated with input ends of multiple exhaust gas heat regenerating devices distributed in a turbine rear casing, and the gas flow of the outlet gas flow outer annular passage of the compressor is transported to each exhaust gas heat regenerating device by the respective gas guiding pipe. The multiple exhaust gas heat regenerating devices are equally divided into two groups, and the output ends of each group of exhaust gas heat regenerating devices are respectively communicated with the transporting header pipes on both sides of the turbine engine core engine by hot air guiding pipes.

Two transporting header pipes are disposed and are respectively located on both sides of the turbine engine core engine. The output ends of a group of U-shaped pipe bundle heat regenerators are communicated with the hot air guiding pipes, and are communicated with the input ends of respective transporting header pipes by three-way joints. Three gas flow output ends are distributed on the respective transporting header pipes, and the transporting branch pipes are respectively connected to the respective gas flow output ends. The output ends of the transporting branch pipes are respectively communicated with the input ends of the propulsor turbine volutes of the respective distributed propulsors.

The output ends of the transporting branch pipes pass through via holes in the distributed propulsor support plates and are connected to the input ends of the propulsor turbine volutes. The propulsor turbine volutes are annular and wrap around the propulsor turbines, and the output ends thereof are evenly distributed inside the propulsor turbine volutes and connected to the input ends of centrifugal propulsor turbines.

When the distributed propulsor is the propulsor turbine-driven ducted fan, the ducted fan includes a fan, a ducted fan casing, a gear reducer, a propulsor turbine shaft, the propulsor turbine volute, the propulsor turbine, a distributed propulsor inner casing and the distributed propulsor support plates. The multiple distributed propulsor support plates are evenly distributed between the ducted fan casing and the distributed propulsor inner casing, so that one end of the distributed propulsor support plate is fixed onto the inner surface of the ducted fan casing, and the other end is fixed onto the outer surface of the distributed propulsor inner casing. The propulsor turbine shaft is located in the distributed propulsor inner casing, and both ends are mounted to a distributed propulsor inner bracket by bearings. The distributed propulsor inner bracket is fixed onto the inner surface of the distributed propulsor inner casing; and a centerline of the propulsor turbine shaft coincides with a centerline of the distributed propulsor inner casing.

When the gas turbine engine core engine adopts the dual-rotor turbojet engine, the output end of a high-pressure compressor of the turbine engine core engine is communicated with the input end of the gas collecting device of the high-energy working medium collecting device; and the output end of the high-energy working medium collecting device is communicated with the inlet of the high-efficiency working medium transporting device.

When the distributed propulsor is the propulsor turbine-driven propeller, the propeller pushes the gas flow to move backward to generate a pulling force.

The essential difference between the present invention and the existing distributed propulsion system is that the medium transporting manner is adopted to realize the energy distribution and transportation in the distributed propulsion system, that is, a high-energy working medium generated by the energy source is directly transported into the distributed propulsors to drive the propulsors to operate. The distributed propulsion system based on the working medium transportation can overcome the dependence of the electric power distribution-based distributed propulsion system on the high-energy density energy storage device and ultra-high-power motor, thereby improving the achievability of the distributed propulsion system on one hand, and getting rid of the mechanical constraints between the gas generator and the propulsors in the mechanical transmission-based distributed propulsion system, breaking through the limitation of the bypass ratio of the traditional turbofan engine and the traditional distributed power, and realizing the heat regenerating-type design to improve the propulsion efficiency on the other hand.

The present invention uses the existing volute technology and U-shaped pipe bundle heat regenerator technology. The volute is an empty shell wrapping around a centripetal turbine, and provided with guide vanes therein for collecting and introducing external gas flow into the centripetal turbine, so as to drive the centripetal turbine to do work. The volute is a commonly used structure for an aviation turbine engine and is also widely used in a turbocharger.

The heat regenerator is the core component of an intercooled heat-regenerating turbine engine. The gas flow at the output end of the compressor exchanges heat with the gas at output end of the turbine by the heat regenerator, thereby effectively utilizing the residual heat of the gas at output end of the turbine and improving the work-doing capacity of the gas flow at the output end of the compressor. The U-shaped pipe bundle heat regenerator is one type of the heat regenerators used in the intercooled heat-regenerating turbine engine. Its main structure is a gas collecting pipe and plural groups of U-shaped pipes on both sides of the gas collecting pipe. The heat exchange gas flow enters from a gas inlet collecting pipe and flows into a gas outlet collecting pipe by opposed double U-shaped pipes. The hotter gas at the turbine output end sweeps through the heat exchanger at a certain incoming flow angle of attack, thereby achieving the purpose of heat exchange.

In the present invention, the working medium transporting-based distributed propulsion system includes the gas turbine engine core engine, the high-energy working medium collecting device, the high-efficiency working medium transporting device, and the distributed propulsors. The working mode is that the gas turbine engine core engine produces the high-energy working medium by the thermal cycle therein. The high-energy working medium collecting device is mounted onto the gas turbine engine core engine and collects the generated excessive high-energy working medium. The output end of the high-energy working medium collecting device is connected to the high-efficiency working medium transporting device, and the high-energy working medium is transported to the distributed propulsors by the high-efficiency working medium transporting device. In the distributed propulsors, the propulsors are driven by the energy of the high-energy working medium to generate thrust.

The gas turbine engine core engine is the single-rotor or dual-rotor gas turbojet engine and generates the high-energy working medium by the Brighton cycle therein. The high-energy working medium is the compressed air introduced from the core engine compressor, and can be reheated at the turbine output end to further improve the internal energy of the working medium.

The high-energy working medium collecting device includes at least one gas collecting device, at least one set of transporting pipelines and at least one exhaust gas heat regenerating device. At least one set of gas collecting devices is mounted on each gas turbine engine core engine. The input end of the gas collecting device is communicated with the output end of a compression component of the gas turbine engine core engine to collect the excessive high-energy working medium generated by the gas turbine engine core engine. The output end of the gas collecting device is communicated with the input end of the transporting pipeline, and the working medium is transported to the at least one exhaust gas heat regenerating device by the transporting pipeline. The output end of the transporting pipeline is communicated with the input end of the exhaust gas heat regenerating device, and the compressed air exchanges heat with exhaust gas in the exhaust gas heat regenerating device. The output end of the exhaust gas heat regenerating device is communicated with the input end of the high-efficiency working medium transporting device.

The high-efficiency working medium transporting device is a high-thermal resistance and low-resistance working medium transporting pipeline, and plays a role of transporting the high-energy working medium to the distributed propulsors. The high-efficiency working medium transporting device includes at least one transporting header pipe and multiple transporting branch pipes. The input end of the transporting header pipe (that is, the input end of the high-efficiency working medium transporting device) is connected to the output end of the working medium collecting device, and the output end of the transporting header pipe is parallel multiple transporting branch pipes. The input end of the transporting branch pipe is connected to the transporting header pipe; and the output end of the transporting branch pipe is connected to the distributed propulsor. Each distributed propulsor corresponds to at least one transporting branch pipe. The transporting header pipe and the transporting branch pipes are made of a material resistant to high temperature and high pressure and having relatively high thermal resistance, and flow guiding devices are disposed at the corners inside the pipeline to reduce flow loss.

The role of the distributed propulsors is to convert the energy of the high-energy working medium into the propulsion work of the aircraft, and the implementing manner thereof includes but not limited to a turbine-driven geared fan system or a turbine-driven geared propeller system. For the propulsor turbine-driven geared fan system, the high-energy working medium passes through the transporting header pipe and the transporting branch pipes of the high-efficiency working medium transporting device in sequence and enters the propulsor turbines and drives the gas turbines to operate. The propulsor turbines drive the fans to generate thrust through gear reducers.

Compared with the prior art, the present invention can further improve the efficiency of the existing transport aircraft power system, reduce carbon emissions, save energy and protect the environment, and improve the achievability of the distributed propulsion system at the same time. The specific analysis is as follows.

The transporting of electrical power and mechanical power is replaced with the manner of working medium transportation, thereby reducing the number of power conversion, and achieving higher system efficiency and lower specific fuel consumption.

The limitations of the mechanical structure, electrical energy storage and ultra-high-power technologies of the existing distributed propulsion systems are broken through to achieve a greater bypass ratio, thereby obtaining higher efficiency and lower specific fuel consumption.

The working medium generating device, the working medium collecting device and the working medium transporting device involved in the invention have been available in practical technologies at present, the basic technologies have high technical maturity, and for the system, only adaptive improvements and modifications are required, thus improving the achievability of the entire system.

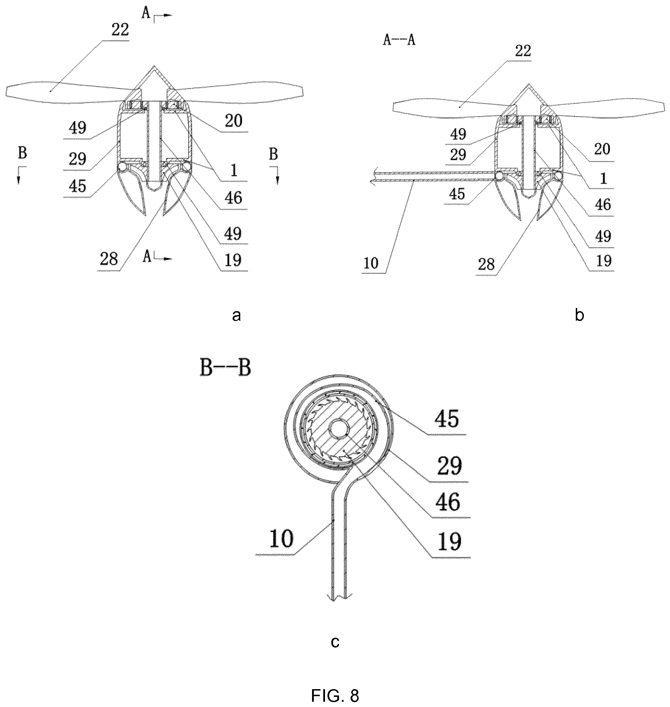

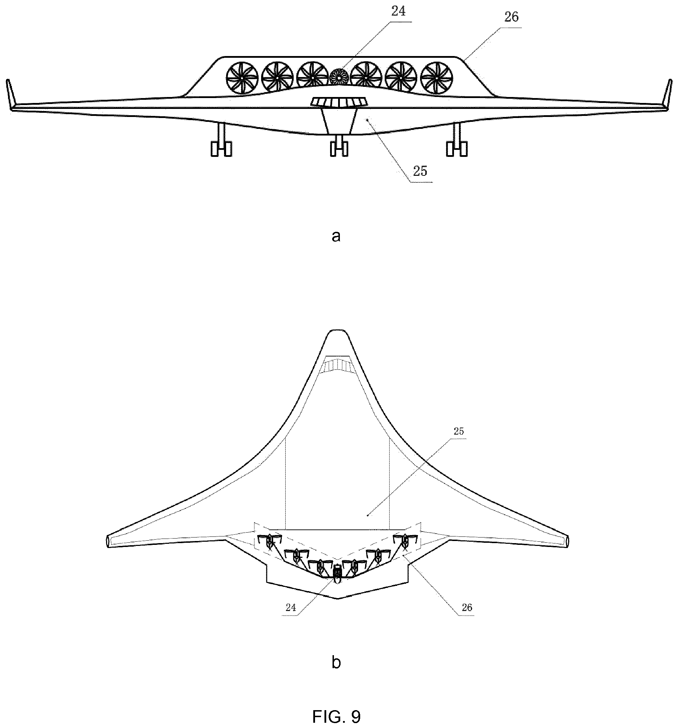

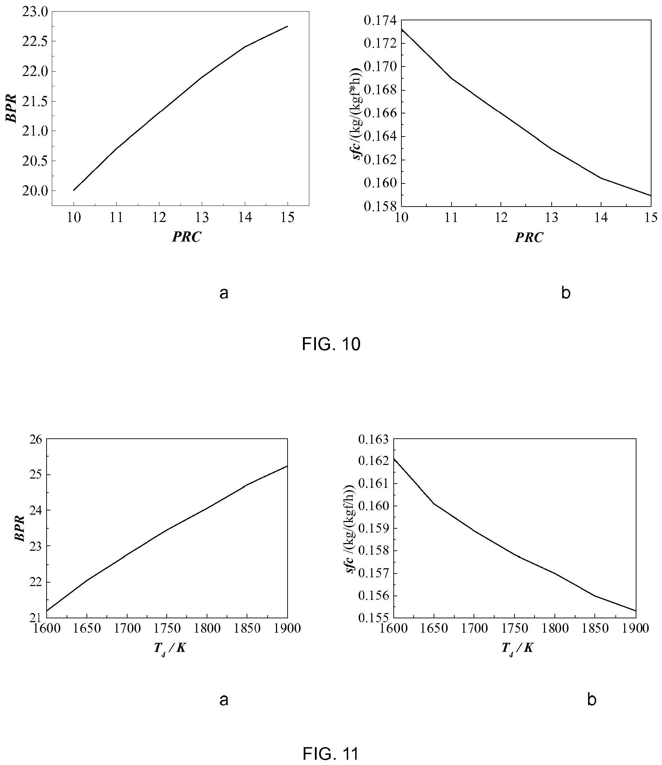

At present, the bypass ratio of the civil large bypass-ratio turbofan engine is close to 10, and the limit of the bypass ratio which may be reached in the future is 10 to 15. An aerodynamic thermal calculation model is established for the above examples, and the influence of main design parameters on the bypass ratio and specific fuel consumption of the propulsion system is analyzed (referring to FIG. 8 to FIG. 11). The calculation result of the aerodynamic thermal force of the working medium-based distributed propulsion system shows that in the prior art, the bypass ratio of the distributed propulsion system is expected to reach 20 to 25 or more, and the specific fuel consumption is reduced by 40% to 50% relative to the specific fuel consumption of the currently most common CFM56 engine (the bypass ratio is about 6.0, and the take-off specific fuel consumption is about 0.37 kg/kgf/h).

### BRIEF DESCRIPTION OF THE DRAWINGS

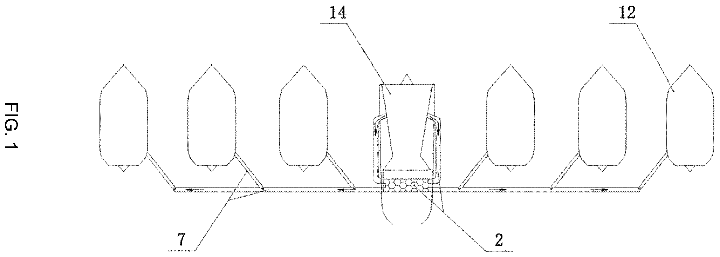

FIG. 1 is a schematic structural view of the present invention.

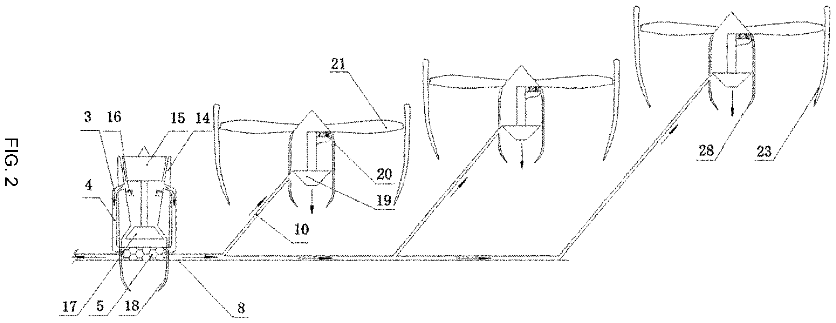

FIG. 2 is a schematic structural view of Embodiment 1.

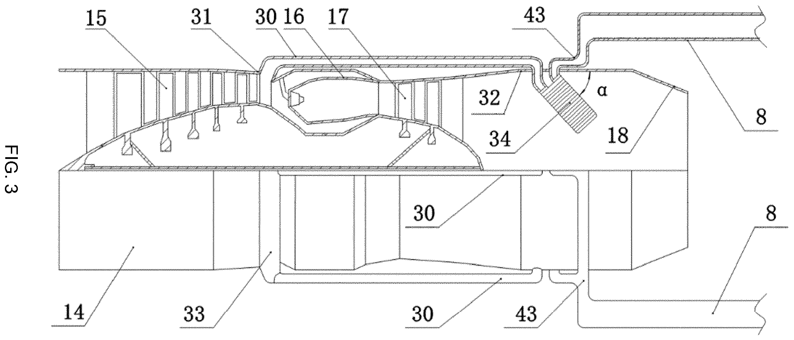

FIG. 3 is a schematic structural view of a gas turbine engine core engine in Embodiment 1.

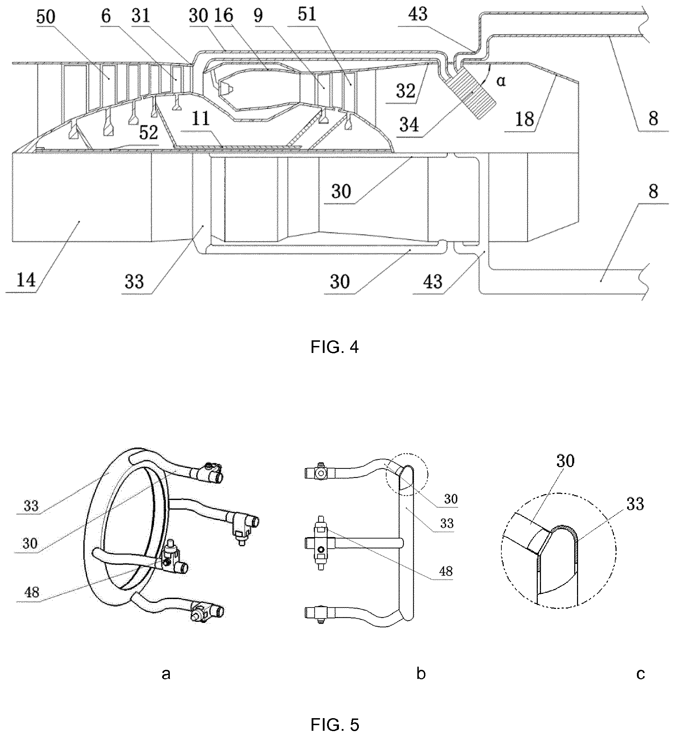

FIG. 4 is a schematic structural view of a gas turbine engine core engine in Embodiment 2.
FIGs. 5 are schematic structural views of a gas collecting ring of a gas turbine engine core engine; wherein FIG. 5a is an isometric view of the gas collecting ring, FIG. 5b is a front view, and FIG. 5c is a partial enlarged view of FIG. 5b.

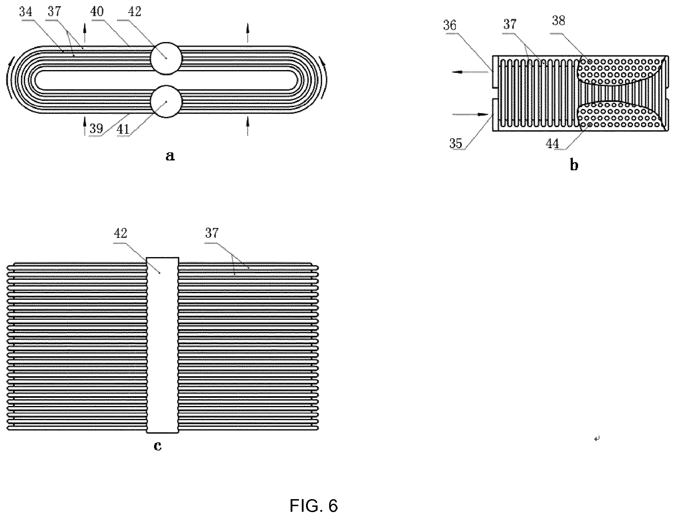

FIGs. 6 are schematic structural views of a U-shaped pipe bundle heat regenerator; wherein FIG. 6a is a front view, FIG. 6b is a side view, and FIG. 6c is a top view.
FIGs. 7 are schematic structural views of a distributed propulsor in Embodiment 1; wherein FIG. 7a is a front view, FIG. 7b is a side view, and FIG. 7c is a top view.
FIGs. 8 are schematic structural views of a distributed propulsor in Embodiment 3; wherein FIG. 8a is a front view, FIG. 8b is a side view, and FIG. 8c is a top view.
FIGs. 9 show the layout of a distributed propulsion system on an aircraft; wherein FIG. 9a is a front view and FIG. 9b is a top view.
FIGs. 10 show the influence of a core engine pressure ratio of compressor on a bypass ratio and a specific fuel consumption; wherein FIG. 10a shows the influence of the pressure ratio of compressor on the bypass ratio, and FIG. 10b shows the influence of the pressure ratio of compressor on the specific fuel consumption; and in FIGs. 10, ***PRC*** refers to the pressure ratio of compressor, ***BPR*** refers to the bypass ratio, and ***sfc*** refers to the specific fuel consumption.
FIGs. 11 show the influence of the core engine turbine front total temperature on the bypass ratio and specific fuel consumption; wherein FIG. 11a shows the influence of the core engine turbine inlet total temperature on the bypass ratio, and FIG. 11b shows the influence of the core engine turbine front total temperature on the specific fuel consumption; and in FIGs. 11, ***T₄*** refers to the core engine turbine inlet total temperature, ***BPR*** refers to the bypass ratio, and ***sfc*** refers to the specific fuel consumption.
FIGs. 12 show the influence of the working medium heat regenerating temperature on the bypass ratio and specific fuel consumption; FIG. 12a shows the influence of the working medium heat regenerating temperature on the bypass ratio, and FIG. 12b shows the influence of the working medium heat regenerating temperature on the specific fuel consumption; and in FIGs. 12, ***T₄₂*** refers to the working medium heat regenerating temperature, ***BPR*** refers to the bypass ratio, and ***sfc*** refers to the specific fuel consumption.

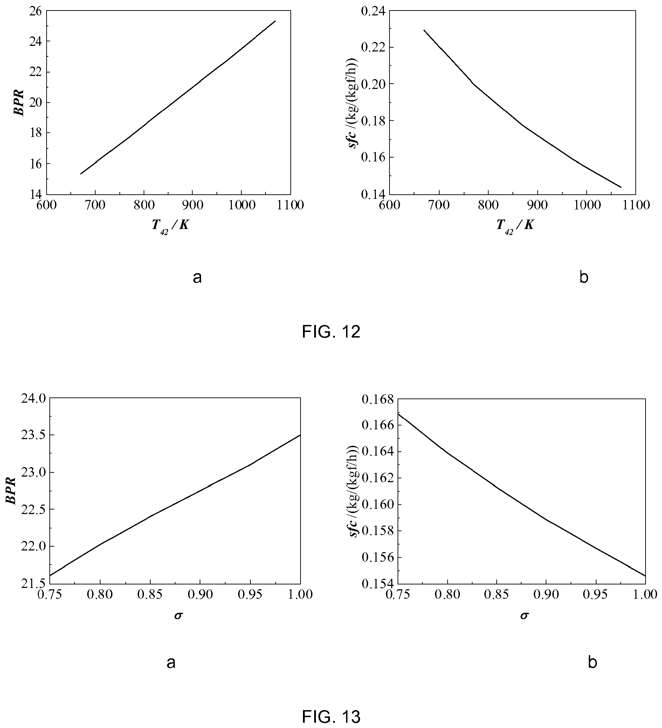

FIGs. 13 show the influence of the total pressure recovery of a working medium transporting device on the bypass ratio and specific fuel consumption; wherein FIG. 13a shows the influence of the total pressure recovery coefficient of the working medium transporting device on the bypass ratio, and FIG. 13b shows the influence of the total pressure recovery coefficient of the working medium transporting device on the specific fuel consumption; and in FIGs. 13, **σ** refers to the total pressure recovery coefficient, ***BPR*** refers to the bypass ratio, and ***sfc*** refers to the specific fuel consumption. In the drawings:
   1. Distributed propulsor inner bracket; 2. High-energy working medium collecting device; 3. Gas collecting device; 4. Transporting pipeline; 5. Exhaust gas heat regenerating device; 6. High-pressure compressor; 7. High-efficiency working medium transporting device; 8. Transporting header pipe; 9. High pressure turbine; 10. Transporting branch pipe; 11. High pressure turbine shaft; 12. Distributed propulsor; 13. Flow guiding device; 14. Gas turbine engine core engine; 15. Core engine compressor; 16. Core engine combustion chamber; 17. Core engine turbine; 18. Core engine spray pipe; 19. Propulsor turbine; 20. Gear reducer; 21. Fan; 22. Propeller; 23. Propulsor outer duct spray pipe; 24. Distributed propulsion system; 25. Blended wing body aircraft; 26. Propulsion cabin; 27. Distributed propulsor support plate; 28. Propulsor inner duct spray pipe; 29. Distributed propulsor inner casing; 30. Gas guiding pipe; 31. Compressor outer casing; 32. Turbine rear casing; 33. Gas collecting ring; 34. U-shaped pipe bundle heat regenerator; 35. Heat regenerator input end; 36. Heat regenerator output end; 37. U-shaped heat exchange pipe; 38. U-shaped heat exchange pipe output end; 39. Hot gas input end; 40. Hot gas output end; 41. Cold incoming flow header pipe; 42. Hot reflux header pipe; 43. Hot air guiding pipe; 44. U-shaped heat exchange pipe input end; 45. Propulsor turbine volute; 46. Propulsor turbine shaft; 47. Ducted fan casing; 48. Gas guiding pipe regulating valve; 49 Bearing; 50. Low-pressure compressor; 51. Low-pressure turbine; 52. Low-pressure turbine shaft.

### DETAILED DESCRIPTION

### Embodiment 1

The present embodiment is a distributed propulsion system based on working medium transporting.

The present embodiment includes a turbine engine core engine 14, a high-efficiency working medium transporting device 7, a high-energy working medium collecting device 2, and distributed propulsors 12. The input end of a gas collecting device 3 of the high-energy working medium collecting device 2 is communicated with the output end of a core engine compressor 15 of the turbine engine core engine. The output end of the high-energy working medium collecting device 2 is communicated with an inlet of the high-efficiency working medium transporting device 7. The output end of a transporting branch pipe 10 in the high-efficiency working medium transporting device 7 is respectively connected to the input end of a propulsor turbine volute 45 of each distributed propulsor 12. The input end of the transporting branch pipe 10 is communicated with a transporting header pipe 8 in the high-efficiency working medium transporting device 7. In the present embodiment, there are multiple distributed propulsors 12, and the multiple distributed propulsors 12 are evenly distributed on both sides of the turbine engine core engine 14. In the present embodiment, the turbine engine core engine 14 is a single-rotor gas turbojet engine.

The gas collecting device 3 includes multiple gas guiding pipes 30, a gas collecting ring 33 and multiple gas guiding pipe regulating valves 48. The gas collecting ring 33 is an annular shell. Multiple gas guiding pipe connecting holes are evenly distributed in the same side surface of the housing of the gas collecting ring 33, and the input ends of the multiple gas guiding pipes 30 are respectively mounted onto the respective gas guiding pipe connecting holes. The multiple gas guiding pipe regulating valves 48 are respectively mounted onto the output ends of the respective gas guiding pipes 30. The surface of the housing of the gas collecting ring 33 is arc-shaped, and an opening of the housing of the arc-shaped gas collecting ring 33 is located inside the housing of the gas collecting ring 33, so that the cross section thereof is U-shaped. The compressor outer casing 31 is cut into two sections; the two side walls at the opening of the gas collecting ring 33 are respectively fixedly connected to the compressor outer casing 31 which is divided into two sections, so that the gas collecting ring 33 and the compressor outer casing 31 jointly form an outlet gas flow outer annular passage of the compressor. The core engine compressor 15 on the gas turbine engine core engine 14 has two annular outlets, which are an inner annular outlet and an outer annular outlet respectively; the outer annular outlet is communicated with the input end of the outlet gas flow outer annular passage of the compressor; and the inner annular outlet is communicated with the input end of a core engine combustion chamber 16.

During assembly, the output ends of the multiple gas guiding pipes 30 on the housing of the gas collecting ring 33 are respectively communicated with the input ends of multiple exhaust gas heat regenerating devices 5 distributed in a turbine rear casing 32, and the gas flow of the outlet gas flow outer annular passage of the compressor is transported into each exhaust gas heat regenerating device 5 by the respective gas guiding pipe 30. The multiple exhaust gas heat regenerating devices are equally divided into two groups. The output ends of each group of exhaust gas heat regenerating devices are respectively communicated with the transporting header pipes 8 located on both sides of the turbine engine core engine 14 by hot air guiding pipes 43.

The exhaust gas heat regenerating devices 5 are circumferentially evenly mounted inside the turbine rear casing 32, and the included angle *α* between the axis of the exhaust gas heat regenerating device and the axis of the turbine engine core engine 14 is between 0°-90°.

In the present embodiment, the exhaust gas heat regenerating device 5 is a U-shaped pipe bundle regenerator 34. A regenerator inlet 35 is connected to a cold incoming flow header pipe 41. A plurality of U-shaped heat exchange pipes 37 is connected in parallel on the side wall of a cold incoming flow header pipe 41. The gas flow enters the U-shaped heat exchange pipes 37 by U-shaped heat exchange pipe input ends 44 on the wall surface of the cold incoming flow header pipe 41. The hot gas of the U-shaped heat exchange pipes 37 flows through the gaps outside the U-shaped heat exchange pipes 37, and exchanges heat with the compressed air inside the U-shaped heat exchange pipes 37 through the pipe walls. The hot air after heat exchange is collected from the U-shaped heat exchange pipe output ends 38 to a hot reflux header pipe 42 and reaches regenerator output ends 36 via the hot reflux header pipe 42. Each of the regenerator output ends 36 is connected to one hot air guiding pipe 43 respectively. The output ends of the hot air guiding pipes 43 are connected to the transporting header pipes 8 of the high-efficiency working medium transporting device 7. The high-temperature and high-pressure air after the heat exchange enters the transporting header pipes 8 through the hot air guiding pipes 43.

Two transporting header pipes 8 are disposed and are respectively located on both sides of the turbine engine core engine 14. The output ends of a group of U-shaped pipe bundle heat regenerators 34 are communicated with the hot air guiding pipes 43, and are communicated with the input ends of respective transporting header pipes by three-way joints

Three gas flow output ends are distributed on each transporting header pipe 8, and a transporting branch pipe 10 is connected to each gas flow output end. The output end of the transporting branch pipe 10 is communicated with the input end of the propulsor turbine volute 45 of each of the distributed propulsors 12 respectively.

The distributed propulsor 12 drives a fan 21 by a propulsor turbine 19.

When the distributed propulsor is the propulsor turbine-driven ducted fan, the ducted fan includes the fan 21, a ducted fan casing 47, a gear reducer 20, a propulsor turbine shaft 46, the propulsor turbine volute 45, the propulsor turbine 19, a distributed propulsor inner casing 29 and distributed propulsor support plates 27. Multiple distributed propulsor support plates 27 are disposed and evenly distributed between the ducted fan casing 47 and the distributed propulsor inner casing 29, so that one end of the distributed propulsor support plate27 is fixed onto the inner surface of the ducted fan casing 47, and the other end is fixed onto the outer surface of the distributed propulsor inner casing 29. The propulsor turbine shaft 46 is located in the distributed propulsor inner casing 29, and both ends are mounted on a distributed propulsor inner bracket 1 by bearings 49. The distributed propulsor inner bracket 1 is fixed onto the inner surface of the distributed propulsor inner casing 29. A centerline of the propulsor turbine shaft 46 coincides with a centerline of the distributed propulsor inner casing 29.

The gear reducer 20 is sleeved at a front end of the propulsor turbine shaft 46, and the propulsor turbine 19 is sleeved at a rear end of the propulsor turbine shaft 46.

The gear reducer 20 is a planetary gear reducer. A sun gear of the planetary gear reducer is sleeved at the front end of the propulsor turbine shaft 46, and the fan 21 is sleeved at an outer gear ring of the planetary gear reducer.

The output end of the transporting branch pipe 10 passes through a via hole in the distributed propulsor support plate 27 and is connected to the input end of the propulsor turbine volute 45. The propulsor turbine volute 45 is annular and wraps around a propulsor turbine 19, and the output end thereof is evenly distributed inside the propulsor turbine volute 45 and connected to the input end of the centrifugal propulsor turbine 19.

The propulsor turbine 19 can convert the internal energy of the high-temperature and high-pressure air into shaft work, and drive the fan 21 to operate by the propulsor turbine shaft 46 and the gear reducer 20. The optimal match between the rotary speeds of the fan 21 and the propulsor turbine 19 can be achieved by the gear reducer 20. The fan 21 sucks incoming air into the ducted fan casing 47 and compresses the same. Subsequently, the compressed air expands in a propulsor outer duct spray pipe 23 to be acceleratively discharged to generate a main thrust.

The working mode of the present embodiment is as follows.

The gas turbine engine core engine 14 utilizes the Brighton cycle occurring therein to produce a high-energy working medium. The core engine compressor 15 draws in incoming air and compresses the same. The compressed air is split into two streams at the output end of the core engine compressor 15. One gas stream enters the gas collecting ring 33 from the input end of the gas collecting ring 33, and the other gas stream enters the core engine combustion chamber 16 to be blended with fuel for burning, thereby forming high-temperature and high-pressure gas. The gas expands in the core engine turbine 17 to do work, and pushes the core engine compressor 15 to operate. The high-temperature and high-pressure gas after the core engine turbine 17 continuously passes through the exhaust gas heat regenerating devices 5 to exchange heat with the compressed air. The gas is discharged from a core engine spray pipe 18, thereby generating a small amount of thrust.

The air collected by the gas collecting ring 33 is transported through the gas guiding pipe 30 to the inlet of the U-shaped pipe bundle regenerator 34, and enters the cold incoming flow header pipe 41. The gas stream enters the U-shaped heat exchange pipes 37 through the U-shaped heat exchange pipe input ends 44 on the wall surface of the cold incoming flow header pipe 41. The hot gas flows through gaps outside the U-shaped heat exchange pipes 37, and exchanges heat with the compressed air inside the U-shaped heat exchange pipes 37 through the pipe walls. The hot air after heat exchange is collected from the U-shaped heat exchange pipe output ends 38 into the hot reflux header pipe 42 and reaches the regenerator output ends 36 through the hot reflux header pipe 42. Each of the regenerator output ends 36 is connected to one hot air guiding pipe 43 respectively. The hot air guiding pipes 43 enable the high-temperature and high-pressure air after heat exchange to enter the transporting header pipes 8 through the hot air guiding pipes 43.

The high-temperature and high-pressure compressed air enters the transporting branch pipes 10 progressively from the transporting header pipes 8 through the gas guiding pipe regulating valves 48 and finally reaches the plurality of distributed propulsors 12.

The high-temperature and high-pressure air enters the propulsor turbine volutes 45 through the transporting branch pipes 10. The propulsor turbine volutes 45 guide the high-temperature and high-pressure air into the propulsor turbines 19. The propulsor turbines 19 convert the expansion work of the high-temperature and high-pressure air into shaft work, and drive the fans 21 to operate by the propulsor turbine shafts 46 and the gear reducers 20. The optimal match between the rotary speeds of the fans 21 and the propulsor turbines 19 can be achieved by the gear reducers 20. The fans 21 suck incoming air into the ducted fan casings 47 and compress the same. Subsequently, the compressed air expands in the propulsor outer duct spray pipe 23 to be acceleratively discharged to generate main thrust.

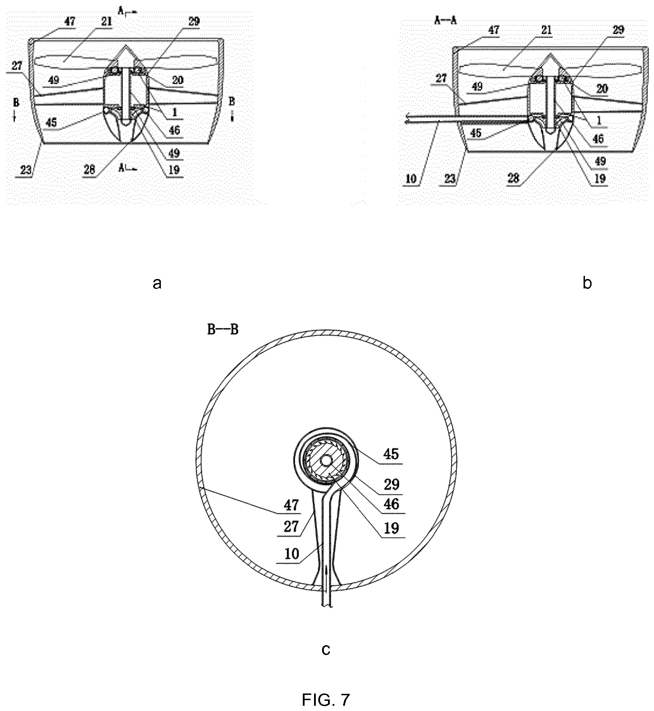

FIG. 7 illustrates the layout of the example of the above distributed propulsion system 24 on a blended wing body aircraft 25. The distributed propulsion system 24 is located in a propulsion cabin 26 on the upper side of the tail of the blended wing body aircraft 25. The single gas turbine engine core engine 14 is located on the fuselage centerline of the blended wing body aircraft 25, and multiple geared fan systems 22 are symmetrically disposed on the left and right sides of the gas turbine engine core engine 14. Due to such mounting manner, the engine can utilize a low velocity boundary layer which flows over the surface of the blended wing body aircraft 25 to enhance the propulsion efficiency.

### Embodiment 2

The present embodiment is a distributed propulsion system based on working medium transportation.

Embodiment 2 differs from Embodiment 1 in that the gas turbine engine core engine 14 in Embodiment 2 is a dual-rotor turbojet engine. The remaining components are the same as those in Embodiment 1.

The present embodiment includes a turbine engine core engine 14, a high-efficiency working medium transporting device 7, a high-energy working medium collecting device 2, and distributed propulsors 12. The input end of the gas collecting device 3 of the high-energy working medium collecting device 2 is communicated with the output end of a high-pressure compressor 6 of the turbine engine core engine. The output end of the high-energy working medium collecting device 2 is communicated with the inlet of the high-efficiency working medium transporting device. The output end of the transporting branch pipe 10 in the high-efficiency working medium transporting device 7 is respectively communicated with the input end of the propulsor turbine volute 45 of each distributed propulsor 12. The input end of the transporting branch pipe 10 is communicated with a transporting header pipe 8 in the high-efficiency working medium transporting device 7. In the present embodiment, multiple distributed propulsors 12 are disposed and are evenly distributed on both sides of the turbine engine core engine 14. In the present embodiment, the turbine engine core engine 14 is a dual-rotor gas turbojet engine.

The two side walls at the opening of the gas collecting ring 33 are respectively fixedly connected to the compressor outer casing 31 which is divided into two sections, so that the gas collecting ring 33 and the compressor outer casing 31 jointly form an outlet gas flow outer annular passage of the high-pressure compressor. The high-pressure compressor 6 on the gas turbine engine core engine 14 has two annular outlets, which are an inner annular outlet and an outer annular outlet respectively. The outer annular outlet is communicated with the input end of the outlet gas flow outer annular passage of the high-pressure compressor, and the inner annular outlet is communicated with the input end of a core engine combustion chamber 16.

During assembly, the output ends of the multiple gas guiding pipes 30 on the housing of the gas collecting ring 33 are respectively communicated with the input ends of multiple exhaust gas heat regenerating devices 5 distributed in a turbine rear casing 32, and the gas flow of the outlet gas flow outer annular passage of the high-pressure compressor is transported to each exhaust gas heat regenerating device 5 by the respective gas guiding pipe 30. The multiple exhaust gas heat regenerating devices are equally divided into two groups. The output ends of each group of exhaust gas heat regenerating devices are respectively communicated with the transporting header pipes 8 located on both sides of the turbine engine core engine 14 by hot air guiding pipes 43.

### Embodiment 3

The present embodiment is a distributed propulsion system based on working medium transportation.

Embodiment 3 differs from Embodiment 1 in that the fan 21 in embodiment 1 is replaced with a propeller 22 in Embodiment 3. The remaining components are the same as in Embodiment 1.

The present embodiment includes a turbine engine core engine 14, a high-efficiency working medium transporting device 7, a high-energy working medium collecting device 2, and distributed propulsors 12. The input end of the gas collecting device 3 of the high-energy working medium collecting device 2 is communicated with the output end of a high-pressure compressor 6 of the turbine engine core engine. The output end of the high-energy working medium collecting device 2 is communicated with the inlet of the high-efficiency working medium transporting device. The output end of the transporting branch pipe 10 in the high-efficiency working medium transporting device 7 is respectively communicated with the input end of the propulsor turbine volute 45 of each distributed propulsor 12. The input end of the transporting branch pipe 10 is communicated with a transporting header pipe 8 in the high-efficiency working medium transporting device 7. In the present embodiment, multiple distributed propulsors 12 are disposed and are evenly distributed on both sides of the turbine engine core engine 14.

Three gas flow output ends are distributed on each of the transporting header pipes 8, and the transporting branch pipe 10 is connected to each gas flow output end. The output end of the transporting branch pipe 10 is communicated with the input end of the propulsor turbine volute 45 of each of the distributed propulsors 12 respectively.

The distributed propulsor 12 drives the propeller 22 by the propulsor turbine 19.

The distributed propulsor includes the propeller 22, the gear reducer 20, the propulsor turbine shaft 46, the propulsor turbine volute 45, the propulsor turbine 19 and the distributed propulsor inner casing 29. The propulsor turbine shaft 46 is located in the distributed propulsor inner casing 29, and both ends are mounted onto the distributed propulsor inner bracket 1 by the bearings 49; and the distributed propulsor inner bracket 1 is fixed onto the inner surface of the distributed propulsor inner casing 29. A centerline of the propulsor turbine shaft 46 coincides with a centerline of the distributed propulsor inner casing 29.

The gear reducer 20 is sleeved at the front end of the propulsor turbine shaft 46, and the propulsor turbine 19 is sleeved at the rear end of the propulsor turbine shaft 46.

The gear reducer 20 is a planetary gear reducer. A sun gear of the planetary gear reducer is sleeved at the front end of the propulsor turbine shaft 46, and the propeller 22 is sleeved at the outer gear ring of the planetary gear reducer.

The output end of the transporting branch pipe 10 is connected to the input end of the propulsor turbine volute 45. The propulsor turbine volute 45 is annular and wraps around the propulsor turbine 19, and the output end thereof is evenly distributed inside the propulsor turbine volute 45 and connected to the input end of the centrifugal propulsor turbine 19.

The propulsor turbine 19 converts the internal energy of the high-temperature and high-pressure air into shaft work, and drives the propeller 22 to operate by the propulsor turbine shaft 46 and the gear reducer 20. The optimal match between the rotary speeds of the propeller 22 and the propulsor turbine 19 can be achieved by the gear reducer 20. The propeller 22 pushes the gas flow to move backward to generate a pull force.

## Claims

1. A distributed propulsion system, comprising: a turbine engine core engine (14), a working medium transporting device (7), a working medium collecting device (2) and distributed propulsors (12); wherein an input end of a gas collecting device (3) of the working medium collecting device (2) is communicated with an output end of a core engine compressor (15) of the turbine engine core engine (14); an output end of the working medium collecting device (2) is communicated with an inlet of the working medium transporting device (7); an input end of the transporting branch pipe (10) is communicated with a transporting header pipe (8) in the working medium transporting device (7); and a plurality of the distributed propulsors (12) is evenly distributed on both sides of the turbine engine core engine (14),
**characterized in that**,
an output end of a transporting branch pipe (10) in the working medium transporting device (7) is respectively communicated with an input end of a propulsor turbine volute (45) of each distributed propulsor (12); and
an exhaust gas heat regenerating device (5) is circumferentially evenly mounted inside the turbine rear casing (32), and the included angle *α* between an axis of the exhaust gas heat regenerating device (5) and an axis of the turbine engine core engine (14) is between 0°-90°.

2. The distributed propulsion system according to claim 1, wherein the turbine engine core engine (14) is a single-rotor gas turbojet engine or a dual-rotor turbojet engine; and/or the distributed propulsor (12) is a propulsor turbine-driven ducted fan or a propulsor turbine-driven propeller.

3. The distributed propulsion system according to claim 1, wherein the gas collecting device (3) comprises a plurality of gas guiding pipes (30), a gas collecting ring (33) and a plurality of gas guiding pipe regulating valves (48); a plurality of gas guiding pipe connecting holes is evenly distributed in the same side surface of a housing of the gas collecting ring, and input ends of the plurality of gas guiding pipes are respectively mounted on the respective gas guiding pipe connecting holes; the plurality of gas guiding pipe regulating valves is respectively mounted to output ends of the respective gas guiding pipes; the surface of the housing of the gas collecting ring is arc-shaped, and an opening of the arc-shaped housing of the gas collecting ring is located inside the housing of the gas collecting ring so that the cross section thereof is U-shaped; a compressor outer casing (31) is cut into two sections; the two side walls at the opening of the gas collecting ring are respectively fixedly connected to the compressor outer casing which is divided into two sections, so that the gas collecting ring and the compressor outer casing jointly form an outlet gas flow outer annular passage of the compressor; the core engine compressor in the gas turbine engine core engine has two annular outlets, which are an inner annular outlet and an outer annular outlet respectively; the outer annular outlet is communicated with an input end of the outlet gas flow outer annular passage of the compressor; and the inner annular outlet is communicated with an input end of a core engine combustion chamber (16); and
during assembly, the output ends of the plurality of gas guiding pipes on the housing of the gas collecting ring are respectively communicated with input ends of a plurality of exhaust gas heat regenerating devices distributed in a turbine rear casing, and the gas flow of the outlet gas flow outer annular passage of the compressor is transported into each exhaust gas heat regenerating device by the respective gas guiding pipe; and an output end of the exhaust gas heat regenerating device is communicated with the transporting header pipe by a hot air guiding pipe (43).

4. The distributed propulsion system according to claim 1, wherein two transporting header pipes are disposed and are respectively located on both sides of the turbine engine core engine; output ends of a group of U-shaped pipe bundle heat regenerators (34) are communicated with hot air guiding pipes (43), and are communicated with input ends of respective transporting header pipes by three-way joints; three gas flow output ends are distributed on the respective transporting header pipes, and the transporting branch pipes are respectively connected to the respective gas flow output ends; and the output ends of the transporting branch pipes are respectively communicated with the input ends of the propulsor turbine volutes of the respective distributed propulsors.

5. The distributed propulsion system according to claim 1, wherein the output ends of the transporting branch pipes (10) pass through via holes in distributed propulsor support plates (27) and are connected to the input ends of the propulsor turbine volutes (45); and the propulsor turbine volutes are annular and wrap around the propulsor turbines (19), and the output ends thereof are evenly distributed inside the propulsor turbine volutes and connected to input ends of centrifugal propulsor turbines.

6. The distributed propulsion system according to claim 2, wherein when the distributed propulsor is the propulsor turbine-driven ducted fan, the ducted fan comprises a fan (21), a ducted fan casing (47), a gear reducer (20), a propulsor turbine shaft (46), the propulsor turbine volute (45), the propulsor turbine (19), a distributed propulsor inner casing (29) and distributed propulsor support plates (27); a plurality of the distributed propulsor support plates is evenly distributed between the ducted fan casing and the distributed propulsor inner casing, so that one end of the distributed propulsor support plate is fixed onto an inner surface of the ducted fan casing, and the other end is fixed onto an outer surface of the distributed propulsor inner casing; the propulsor turbine shaft is located in the distributed propulsor inner casing, and both ends are mounted to a distributed propulsor inner bracket by bearings; the distributed propulsor inner bracket is fixed onto an inner surface of the distributed propulsor inner casing; and a centerline of the propulsor turbine shaft coincides with a centerline of the distributed propulsor inner casing.

7. The distributed propulsion system according to claim 2, wherein when the gas turbine engine core engine adopts the dual-rotor turbojet engine, an output end of a high-pressure compressor of the turbine engine core engine is communicated with the input end of the gas collecting device of the working medium collecting device; and the output end of the working medium collecting device is communicated with the inlet of the working medium transporting device.

8. The distributed propulsion system according to claim 2, wherein when the distributed propulsor is a propulsor turbine-driven propeller, the propeller pushes a gas flow to move backwards to generate a pulling force.

9. The distributed propulsion system according to any of claims 1 to 8, wherein the number of the distributed propulsors is 6.

## Patentansprüche

1. Verteiltes Antriebssystem, das Folgendes umfasst: ein Turbinentriebwerk-Kerntriebwerk (14), eine Arbeitsmedium-Beförderungseinrichtung (7), ein Arbeitsmedium-Sammeleinrichtung (2) und verteilte Propellergondeln (12), wobei ein Eingangsende einer Gassammeleinrichtung (3) der Arbeitsmedium-Sammeleinrichtung (2) mit einem Ausgangsende eines Kerntriebwerksverdichters (15) des Turbinentriebwerk-Kerntriebwerks (14) in Verbindung steht, ein Ausgangsende der Arbeitsmedium-Sammeleinrichtung (2) mit einem Einlass der Arbeitsmedium-Beförderungseinrichtung (7) in Verbindung steht, ein Eingangsende des Beförderungszweigrohres (10) mit einem Beförderungssammelrohr (8) in der Arbeitsmedium-Beförderungseinrichtung (7) in Verbindung steht und mehrere der verteilten Propellergondeln (12) gleichmäßig auf beiden Seiten des Turbinentriebwerk-Kerntriebwerks (14) verteilt sind,
**dadurch gekennzeichnet, dass**
ein Ausgangsende eines Beförderungszweigrohres (10) in der Arbeitsmedium-Beförderungseinrichtung (7) jeweils mit einem Eingangsende eines Propellergondelturbinen-Spiralgehäuses (45) jeder verteilten Propellergondel (12) in Verbindung steht und
eine Abgaswärme-Rückgewinnungseinrichtung (5) umlaufend gleichmäßig innerhalb des hinteren Turbinenmantels (32) angebracht ist und der eingeschlossene Winkel α zwischen einer Achse der Abgaswärme-Rückgewinnungseinrichtung (5) und einer Achse des Turbinentriebwerk-Kerntriebwerks (14) zwischen 0° und 90° beträgt.

2. Verteiltes Antriebssystem nach Anspruch 1, wobei das Turbinentriebwerk-Kerntriebwerk (14) ein Einzelrotor-Gasturbinen-Strahltriebwerk oder ein Doppelrotor-Turbinenstrahltriebwerk ist und/oder die verteilte Propellergondel (12) ein durch Propellergondelturbine angetriebenes Mantelgebläse oder ein durch Propellergondelturbine angetriebener Propeller ist.

3. Verteiltes Antriebssystem nach Anspruch 1, wobei die Gassammeleinrichtung (3) mehrere Gasleitrohre (30), einen Gassammelring (33) und mehrere Gasleitrohr-Regulierventile (48) umfasst, mehrere Gasleitrohr-Verbindungslöcher gleichmäßig in der gleichen Seitenfläche eines Gehäuses des Gassammelrings verteilt sind und Eingangsenden der mehreren Gasleitrohre jeweils an den jeweiligen Gasleitrohr-Verbindungslöchern angebracht sind, wobei die mehreren Gasleitrohr-Regulierventile jeweils an Ausgangsenden der jeweiligen Gasleitrohre angebracht sind, die Oberfläche des Gehäuses des Gassammelrings bogenförmig ist und eine Öffnung des bogenförmigen Gehäuses des innerhalb des Gehäuses des Gassammelrings angeordnet ist, so dass der Querschnitt derselben U-förmig ist, ein Verdichter-Außenmantel (31) in zwei Sektionen geschnitten ist, die zwei Seitenwände an der Öffnung des Gassammelrings jeweils fest mit dem Verdichter-Außenmantel verbunden sind, der in zwei Sektionen geteilt ist, so dass der Gassammelring und der Verdichter-Außenmantel gemeinsam einen äußeren ringförmigen Auslassgasstromdurchgang des Verdichters bilden, der Kerntriebwerksverdichter in dem Gasturbinentriebwerk-Kerntriebwerk zwei ringförmige Auslässe aufweist, die jeweils ein innerer ringförmiger Auslass beziehungsweise ein äußerer ringförmiger Auslass sind, der äußere ringförmige Auslass mit einem Eingangsende des äußeren ringförmigen Auslassgasstromdurchgangs in Verbindung steht und der innere ringförmige Auslass mit einem Eingangsende einer Kerntriebwerk-Brennkammer (16) in Verbindung steht und,
während des Zusammenbaus, die Ausgangsenden der mehreren Gasleitrohre an dem Gehäuse des Gassammelrings jeweils mit Eingangsenden mehrerer Abgaswärme-Rückgewinnungseinrichtungen, die in einem hinteren Turbinenmantel verteilt sind, in Verbindung stehen und der Gasstrom des äußeren ringförmigen Auslassgasstromdurchgangs des Verdichters durch das jeweilige Gasleitrohr in jede Abgaswärme-Rückgewinnungseinrichtung befördert wird und ein Ausgangsende der Abgaswärme-Rückgewinnungseinrichtung durch ein Heißluftleitrohr (43) mit dem Beförderungssammelrohr in Verbindung steht.

4. Verteiltes Antriebssystem nach Anspruch 1, wobei zwei Beförderungssammelrohre angeordnet sind und jeweils auf beiden Seiten des Turbinentriebwerk-Kerntriebwerks positioniert sind, Ausgangsenden einer Gruppe von U-förmigen Rohrbündel-Wärmerückgewinnern (34) durch Dreiwegeverbindungen mit Heißluftleitrohren (43) in Verbindung stehen und mit Eingangsenden jeweiliger Beförderungssammelrohre in Verbindung stehen, drei Gasstrom-Ausgangsenden an den jeweiligen Beförderungssammelrohren verteilt sind und die Beförderungszweigrohre jeweils mit den Gasstrom-Ausgangsenden verbunden sind und die Ausgangsenden der Beförderungszweigrohre jeweils mit den Eingangsenden der Propellergondelturbinen-Spiralgehäuse der jeweiligen verteilten Propellergondeln in Verbindung stehen.

5. Verteiltes Antriebssystem nach Anspruch 1, wobei die Ausgangsenden der Beförderungssammelrohre (10) über Löcher in Stützplatten (27) der verteilten Propellergondeln hindurchgehen und mit den Eingangsenden der Propellergondelturbinen-Spiralgehäuse (45) verbunden sind und die Propellergondelturbinen-Spiralgehäuse ringförmig sind und sich um die Propellergondelturbinen (19) wickeln und die Ausgangsenden derselben gleichmäßig innerhalb der Propellergondelturbinen-Spiralgehäuse verteilt und mit Eingangsenden von zentrifugalen Propellergondelturbinen verbunden sind.

6. Verteiltes Antriebssystem nach Anspruch 2, wobei, wenn die verteilte Propellergondel das durch Propellergondelturbine angetriebene Mantelgebläse ist, das Mantelgebläse ein Gebläse (21), ein Mantelgebläse-Gehäuse (47), ein Vorsatzgetriebe (20), eine Propellergondel-Turbinenwelle (46), das Propellergondelturbinen-Spiralgehäuse (45), die Propellergondelturbine (19), einen verteilten Innenmantel (29) der verteilten Propellergondeln und Stützplatten (27) der verteilten Propellergondeln umfasst, wobei mehrere der Stützplatten der verteilten Propellergondeln gleichmäßig zwischen dem Mantelgebläse-Gehäuse und dem Innenmantel der verteilten Propellergondeln verteilt sind, so dass das eine Ende der Stützplatte der verteilten Propellergondeln an einer Innenfläche des Mantelgebläse-Gehäuses befestigt ist und das andere Ende an einer Außenfläche des Innenmantels der verteilten Propellergondeln befestigt ist, die Propellergondel-Turbinenwelle in dem Innenmantel der verteilten Propellergondeln positioniert ist und beide Enden durch Lager an einer Innenstütze der verteilten Propellergondeln angebracht sind, wobei die Innenstütze der verteilten Propellergondeln an einer Innenfläche des Innenmantels der verteilten Propellergondeln befestigt ist und eine Mittellinie der Propellergondel-Turbinenwelle mit einer Mittellinie des Innenmantels der verteilten Propellergondeln übereinstimmt.

7. Verteiltes Antriebssystem nach Anspruch 2, wobei, wenn das Gasturbinentriebwerk-Kerntriebwerk das Doppelrotor-Turbinenstrahltriebwerk anwendet, ein Ausgangsende eines Hochdruckverdichters des Turbinentriebwerk-Kerntriebwerks mit dem Eingangsende der Gassammeleinrichtung der Arbeitsmedium-Sammeleinrichtung in Verbindung steht und das Ausgangsende der Arbeitsmedium-Sammeleinrichtung mit de, Einlass der Arbeitsmedium-Beförderungseinrichtung in Verbindung steht.

8. Verteiltes Antriebssystem nach Anspruch 2, wobei, wenn die verteilte Propellergondel ein durch Propellergondelturbine angetriebener Propeller ist, der Propeller einen Gasstrom antreibt, sich nach hinten zu bewegen, um eine Zugkraft zu erzeugen.

9. Verteiltes Antriebssystem nach einem der Ansprüche 1 bis 8, wobei die Anzahl der verteilten Propellergondeln 6 beträgt.

## Revendications

1. Système de propulsion réparti, comprenant : un moteur central de moteur à turbine (14), un dispositif de transport de fluide fonctionnel (7), un dispositif de collecte de fluide fonctionnel (2) et des propulseurs répartis (12) ; une extrémité d'entrée d'un dispositif de collecte de gaz (3) du dispositif de collecte de fluide fonctionnel (2) étant en communication avec une extrémité de sortie d'un compresseur de moteur principal (15) du moteur central de moteur à turbine (14) ; une extrémité de sortie du dispositif de collecte de fluide fonctionnel (2) étant en communication avec une entrée du dispositif de transport de fluide fonctionnel (7) ; une extrémité d'entrée du tuyau de branches de transport (10) étant en communication avec un tuyau sommital de transport (8) dans le dispositif de transport de fluide fonctionnel (7) ; et une pluralité des propulseurs répartis (12) étant répartis régulièrement sur les deux faces du moteur central de moteur à turbine (14),
**caractérisé en ce**
**qu'**une extrémité de sortie d'un tuyau de branches de transport (10) dans le dispositif de transport de fluide fonctionnel (7) est respectivement en communication avec une extrémité d'entrée d'une volute de turbine de propulseur (45) de chaque propulseur réparti (12) ; et
**qu'**un dispositif de régénération de chaleur de gaz d'échappement (5) est monté régulièrement en circonférence à l'intérieur du compartiment arrière de turbine (32), et que l'angle inclus α entre un axe du dispositif de régénération de chaleur de gaz d'échappement (5) et un axe du moteur principal de moteur à turbine (14) est compris entre 0° et 90°.

2. Système de propulsion réparti selon la revendication 1, dans lequel le moteur principal de moteur à turbine (14) est un moteur à turboréacteur à gaz à rotor unique ou un moteur à turboréacteur à double rotor ; et/ou le propulseur réparti (12) est une soufflante canalisée entraînée par turbine de propulseur ou une hélice entraînée par turbine de propulseur.

3. Système de propulsion réparti selon la revendication 1, dans lequel le dispositif de collecte de gaz (3) comprend une pluralité de tuyaux de guidage de gaz (30), un anneau de collecte de gaz (33) et une pluralité de soupapes de régulation de tuyaux de guidage de gaz (48) ; une pluralité de trous de connexion de tuyaux de guidage de gaz répartis régulièrement dans la même surface latérale d'un boîtier de l'anneau de collecte de gaz, et les extrémités d'entrée de la pluralité de tuyaux de guidage de gaz sont respectivement montées sur les trous de connexion de tuyaux de guidage de gaz respectifs, la pluralité de soupapes de régulation de tuyaux de guidage de gaz étant respectivement montées sur des extrémités de sortie des tuyaux de guidage de gaz respectifs ; la surface du boîtier de l'anneau de collecte de gaz étant de forme arquée, et une ouverture du boîtier de forme arquée de l'anneau de collecte de gaz se trouvant à l'intérieur du boîtier de l'anneau de collecte de gaz, de sorte que sa section transversale est en forme de U ; un compartiment extérieur de compresseur (31) étant découpé en deux sections ; les deux parois latérales au niveau de l'ouverture de l'anneau de collecte étant respectivement connectées fixement au compartiment extérieur de compresseur qui est divisé en deux sections, de sorte que l'anneau de collecte de gaz et le compartiment extérieur de compresseur forment conjointement un passage annulaire extérieur de flux de gaz de sortie du compresseur ; le compresseur de moteur principal situé dans le moteur principal de moteur à turbine à gaz comporte deux sorties annulaires qui sont une sortie annulaire interne et une sortie annulaire externe respectivement ; la sortie annulaire externe est en communication avec une extrémité d'entrée du passage annulaire de flux de gaz extérieur de flux de gaz de sortie du compresseur ; et la sortie annulaire interne est en communication avec une extrémité d'entrée d'une chambre de combustion de moteur principal (16) ; et,
pendant l'assemblage, les extrémités de sortie de la pluralité de tuyaux de guidage de gaz situés sur le boîtier de l'anneau de collecte de gaz sont respectivement en communication avec des extrémités d'entrée d'une pluralité de dispositifs de régénération de chaleur de gaz d'échappement répartis dans un compartiment arrière de turbine, et le flux de gaz du passage annulaire extérieur de flux de gaz de sortie du compresseur est transporté dans chaque dispositif de régénération de chaleur de gaz d'échappement par le tuyau de guidage de gaz respectif ; et une extrémité de sortie du dispositif de régénération de chaleur de gaz d'échappement est en communication avec le tuyau sommital de transport par un tuyau de guidage d'air chaud (43).

4. Système de propulsion réparti selon la revendication 1, dans lequel deux tuyaux sommitaux de transport sont disposés et sont respectivement situés sur les deux faces du moteur principal de moteur à turbine ; les extrémités de sortie d'un groupe de régénérateurs de chaleur à faisceau de tuyaux en forme de U (34) sont en communication avec des tuyaux de guidage d'air chaud (43), et sont en communication avec des extrémités d'entrée de tuyaux sommitaux de transport respectives par des jointures à trois passages ; trois extrémités de sortie de flux de gaz sont réparties sur les tuyaux sommitaux de transport respectifs, et les tuyaux de branches de transport sont respectivement connectés aux extrémités de sortie de flux de gaz respectives ; et les extrémités de sortie des tuyaux de branches de transport sont respectivement en communication avec les extrémités d'entrée des volutes de turbines de propulseurs des propulseurs répartis respectifs.

5. Système de propulsion réparti selon la revendication 1, dans lequel les extrémités de sortie des tuyaux de branches de transport (10) passent à travers les trous traversants de plaques supports de propulseurs répartis (27) et sont connectées aux extrémités d'entrée des volutes de turbines de propulseurs (45) ; et les volutes de turbines de propulseurs sont annulaires et entourent les turbines de propulseurs (19), et leurs extrémités de sortie sont réparties régulièrement à l'intérieur des volutes de turbines de propulseurs et connectées à des extrémités d'entrée de turbines de propulseurs centrifuges.

6. Système de propulsion réparti selon la revendication 2, dans lequel, lorsque le propulseur réparti est la soufflante canalisée entraînée par turbine de propulseur, la soufflante canalisée comprend une soufflante (21), un compartiment de soufflante canalisée (47), un réducteur (20), un arbre de turbine de propulseur (46), la volute de turbine de propulseur (45), la turbine de propulseur (19), un compartiment intérieur de propulseur réparti (29) et des plaques supports de propulseur réparti (27) ; une pluralité de plaques supports de propulseur réparti sont réparties régulièrement entre le compartiment de soufflante canalisée et le compartiment intérieur de propulseur réparti, de sorte qu'une extrémité de la plaque support de propulseur réparti est fixée sur une surface intérieure du compartiment de soufflante canalisée, et que l'autre extrémité est fixée sur une surface extérieure du compartiment intérieur de propulseur réparti ; l'arbre de turbine de propulseur se trouve dans le compartiment intérieur de propulseur réparti, et les deux extrémités sont montées sur un support intérieur de propulseur réparti par des paliers ; le support intérieur de propulseur réparti est fixé sur une surface intérieure du compartiment intérieur de propulseur réparti ; et une ligne centrale de l'arbre de turbine de propulseur coïncide avec une ligne centrale du compartiment intérieur de propulseur réparti.

7. Système de propulsion réparti selon la revendication 2, dans lequel le moteur principal de moteur à turbine à gaz adopte le moteur à turboréacteur à double rotor, une extrémité de sortie d'un compresseur à haute pression du moteur principal de moteur à turbine est en communication avec l'extrémité d'entrée du dispositif de collecte de gaz du dispositif de collecte de fluide fonctionnel ; et l'extrémité de sortie du dispositif de collecte de fluide fonctionnel est en communication avec l'entrée du dispositif de transport de fluide fonctionnel.

8. Système de propulsion réparti selon la revendication 2, dans lequel, si le propulseur réparti est une hélice entraînée par turbine de propulseur, l'hélice pousse le flux de gaz à se déplacer vers l'arrière pour générer une force de traction.

9. Système de propulsion réparti selon l'une quelconque des revendications 1 à 8, dans lequel le nombre de propulseurs répartis est de 6.
